# EUROPÄISCHE PATENTSCHRIFT

(11) **EP 0 317 801 B1**
(45) Veröffentlichungstag und Bekanntmachung des Hinweises auf die Patenterteilung: **11.01.1995**
(21) Anmeldenummer: 88118289.3
(22) Anmeldetag: 03.11.1988
(51) Int. Cl.: C08J 9/14, C08L 75/04

(54) **Verfahren zum Herstellen von Formkörpern aus Polyurethan-Weich-Integralschaum**
Process for preparing soft integral polyurethane foam articles
Procédé pour préparer des articles en mousse intégrée de polyuréthane souple

(30) Priorität: 07.11.1987 DE 3737925
(43) Veröffentlichungstag der Anmeldung: 31.05.1989
(73) Patentinhaber: PHOENIX AKTIENGESELLSCHAFT, 21079 Hamburg (DE)
(72) Erfinder: Schaper, Herbert, Dr. Dipl.-Chem., D-2000 Hamburg 13 (DE); Krässig, Reinhard, Dr. Dipl.-Chem., D-2105 Seevetal 2 (DE)

(56) Entgegenhaltungen:
- EP-A- 0 226 969
- FR-A- 2 077 255
- GB-A- 1 209 456
- IE-A- 30 477

## Beschreibung

Die Erfindung betrifft ein Verfahren zum Herstellen von Formkörpern aus Polyurethan-Weich-Integralschaum (z.B. Kopfstützen, Armlehnen, weiche Heckspoiler) mit einer Dichte von 0,3 bis 0,8 g/cm³, insbesondere von 0,3 bis 0,6 g/cm³, durch Verschäumen der Polyolkomponente (A-Komponente) mit der Isocyanatkomponente (B-Komponente) in Gegenwart eines Treibmittels (C-Komponente).

Bezüglich der Herstellung von Formkörpern aus PU-Integralschaum gibt es zahlreiche veröffentlichte Arbeiten, wobei nun die bisherigen Entwicklungsarbeiten der Anmelderin auf diesem Gebiet im Rahmen einer übersicht aufgeführt werden.
DE-A-24 61 521 DE-C-26 12 896
DE-A-27 14 518 DE-C-28 19 037
DE-A-27 18 173 DE-C-32 26 818
DE-A-29 22 769
Bei der Herstellung von PU-Weich-Integratschaumartikeln beobachtet man öfters die Bildung einer porösen bzw. pickeligen Oberfläche, u.a. bedingt durch den hohen Treibmittelgehalt.

Aufgabe der Erfindung ist es daher, PU-Weich-Integralschaumartikel herzustellen, die eine glatte lackierfähige Oberfläche aufweisen. Zudem sollen die A- und B-Komponenten lagerungs- und alterungsbeständiger sein.

Diese Aufgabe wird nun erfindungsgemäß dadurch gelöst, daß das Treibmittel in Form einer separaten Zudosierung unter Hochdruck in einer Menge von 0,5 bis 5 Gew.-%, insbesondere 1 bis 2 Gew.-%, bezogen auf Gesamtmasse von A-, B- und C-Komponente zugesetzt wird, wobei die Treibmittelbeigabe nach einer der drei Verfahrensvarianten erfolgt:
- Variante I:: Das Treibmittel wird der A-Komponente kurz vor der Verdüsung beigegeben.
- Variante II:: Das Treibmittel wird der B-Komponente kurz vor der Verdüsung beigegeben.
- Variante III:: Das Treibmittel wird bei der Verdüsung additiv im Mischkopf beigegeben.

Als Treibmittel werden zweckmäßigerweise folgende Substanzklassen eingesetzt:
- Halogenkohlenwasserstoffe;
- Benzin, Ester und/oder Ether.

Als Halogenkohlenwasserstoffe kommen insbesondere Methylenchlorid oder Gemische aus Methylenchlorid und Fluor-Chlor-Kohlenwasserstoffen zum Einsatz. Dabei wird insbesondere ein Gemisch aus Methylenchlorid und Trichlorfluormethan im Verhältnis von 1 : 3 verwendet.

Die A-Komponente weist zweckmäßigerweise eine natürliche Luftbeladung von weniger als 5 Vol-% auf.

Im folgenden werden zwei Versuchsreihen aufgeführt, wobei zunächst einmal die allgemeinen Versuchsbedingungen genannt werden.
A-Komponente: treibmittelfreie Polyolmischung (Gew.-T)

| | |
|---|---|
| verzweigter Polyether (MG 4800) | 100,0 |
| Butandiol-1,4 | 11,0 |
| Triethylendiamin (33-%ig in Dipropylenglycol gelöst) | 2,0 |
| Schwarzpaste (25-%ig, Ruß dispergiert in Polyol) | 5,6 |

B-Komponente: MDI-Prepolymer mit Tripropylenglycol (MDI = 4,4′-Methylendiphenyldiisocyanat)
C-Komponente: Methylenchlorid / Trichlorfluormethan (1 : 3)
Rohstofftemperatur:

| | |
|---|---|
| A-Komponente: | 25 - 27°C |
| B-Komponente: | 30 - 34°C |
| C-Komponente: | RT (ca. 21°C) |

Form: Heckspoiler (schräg aufgestellt)

| | |
|---|---|
| Formtemperatur: | 40°C |
| Formvolumen: | 3,6 l |
| Formstandzeit: | 8 min |

Anlage: Hochdruck-RIM-Anlage (Das Treibmittel wird in den Polyolstrom vor der Verdüsung mit Hochdruck eingespritzt zur Vorvermischung.)

| | |
|---|---|
| Förderleistung: | 340 g/sec |

### Versuchsreihe 1

| Ziel: Untersuchung des Einflusses des Mengenanteils an C-Komponente auf die Oberfläche | | |
|---|---|---|
| Mischungsverhältnis von A : B : C in Gew.-T | C-Komponente (Gew.-%) | Oberflächeneigenschaft |
| 100 : 55 : 17,8 | 10,3 | sehr pickelig |
| 100 : 55 : 15,5 | 9,1 | (sehr) pickelig |
| 100 : 55 : 10,7 | 6,5 | pickelig |
| 100 : 55 : 7,5 | 4,6 | Pickeligkeit fast verschwunden |
| 100 : 55 : 5,3 | 3,3 | praktisch glatt |
| 100 : 55 : 2,5 | 1,6 | glatt |
| Natürliche Luftbeladung der A-Komponente (< 5 Vol.-%) Einschußzeit: 5,3 bis 5,5 sec Dichte des Artikels: 0,46 g/cm³ | | |

### Versuchsreihe 2

| Ziel: Untersuchung des Einflusses anderer Größen (Einschußzeit, Luftbeladung, Dichte) auf die Oberfläche | | | |
|---|---|---|---|
| Einschußzeit (sec) | Luftbeladung (Vol.-%) | Dichte (g/cm³) | Oberflächeneigenschaften |
| 5,3 | < 5 | 0,46 | glatt |
| 5,3 | 22 | 0,46 | glatt |
| 5,3 | 35 | 0,46 | beginnende Pickelbildung |
| 4,8 | 35 | 0,41 | glatt |

Mischungsverhältnis von A : B : C in Gew.-T (100 : 55 : 2,7) C-Komponente: 1,7 Gew.-% (bezogen auf Gesamtmischung).

### Gesamtergebnis:

1) Bei einem Anteil von Treibmitteln (C-Komponente) von 0,5 bis 5 Gew.-% erhält man eine glatte bzw. nahezu glatte Artikeloberfläche, wobei man die besten Oberflächeneigenschaften bei einem Anteil von kleiner 2 Gew.-% an Treibmittel erhält. Dies ist überraschend, da man bisher davon ausgegangen ist, daß bei der Herstellung von Artikeln aus PU-Weich-Integralschaum ein Anteil von 10 bis 15 Gew.-% Treibmittel erforderlich ist, um die gewünschte Dichte (insbesondere < 0,6 g/cm³) und Lackierbarkeit der Oberfläche zu erreichen. Geringere Mengen (< 10 Gew.-%) an Treibmitteln sind bisher nur bei der Herstellung von Formkörpern aus Polyurethan-Integralschaum mit einer Dichte von 0,9 g/cm³ (DE-C-28 19 037) sowie aus harten Polyurethan-Schaumstoffen im Rahmen des Niederdruck-Verfahrens (GB-A-1 209 456) zugesetzt worden.
2) Durch Variation der Einschußzeit kann bei hoher Luftbeladung die Oberflächeneigenschaft verbessert werden. Gleichzeitig wird die Dichte weiter erniedrigt.
3) Durch die separate Treibmittelzudosierung sind die A- und B-Komponenten lagerungs- und alterungsbeständiger.

## Patentansprüche

1. Verfahren zum Herstellen von Formkörpern aus Polyurethan-Weich-Integralschaum mit einer Dichte von 0,3 bis 0,8 g/cm³, insbesondere von 0,3 bis 0,6 g/cm³, durch Verschäumen der Polyolkomponente (A-Komponente) mit der Isocyanatkomponente (B-Komponente) in Gegenwart eines Treibmittels (C-Komponente), dadurch gekennzeichnet, daß das Treibmittel in Form einer separaten Zudosierung unter Hochdruck in einer Menge von 0,5 bis 5 Gew.-%, insbesondere 1 bis 2 Gew.-%, bezogen auf Gesamtmasse von A-, B- und C-Komponente zugesetzt wird, wobei die Treibmittelbeigabe nach einer der drei Verfahrensvarianten erfolgt:
Variante I : Das Treibmittel wird der A-Komponente kurz vor der Verdüsung beigegeben.
Variante II : Das Treibmittel wird der B-Komponente kurz vor der Verdüsung beigegeben.
Variante III : Das Treibmittel wird bei der Verdüsung additiv im Mischkopf beigegeben.

2. Verfahren nach Anspruch 1, dadurch gekennzeichnet, daß als Treibmittel Halogenkohlenwasserstoffe eingesetzt werden.

3. Verfahren nach Anspruch 2, dadurch gekennzeichnet, daß als Treibmittel Methylenchlorid eingesetzt wird.

4. Verfahren nach Anspruch 3, dadurch gekennzeichnet, daß dem Methylenchlorid Fluor-Chlor-Kohlenwasserstoffe beigemischt werden.

5. Verfahren nach Anspruch 4, dadurch gekennzeichnet, daß als Treibmittel ein Gemisch aus Methylenchlorid und Trichlorfluormethan im Verhältnis 1 : 3 eingesetzt wird.

6. Verfahren nach Anspruch 1, dadurch gekennzeichnet, daß als Treibmittel Benzin, Ester und/oder Ether eingesetzt werden.

7. Verfahren nach einem der Ansprüche 1 bis 6, dadurch gekennzeichnet, daß die A-Komponente eine natürliche Luftbeladung (< 5 Vol.-%) aufweist.

## Claims

1. A method of production of mouldings from soft polyurethane integral foam of a density of from 0.3 to 0.8 g/cm³, especially 0.3 to 0.6 g/cm³, by foaming the polyalcohol constituent (A-constituent) with the isocyanate constituent (B-constituent) in the presence of a foaming-agent (C-constituent), characterized in that the foaming-agent is added under high pressure in the form of a separate metered addition in an amount of from 0.5 to 5 % by wt., especially 1 to 2 % by wt., referred to the total mass of A-, B- and C-constituents, the addition of foaming-agent being effected according to one of the three variants upon the method:
Variant I : The foaming-agent is added to the A-constituent shortly before the atomization;
Variant II : The foaming-agent is added to the B-constituent shortly before the atomization;
Variant III : The foaming-agent is added in the mixer head additively during the atomization.

2. A method as in Claim 1, characterized in that halogen hydrocarbons are used as foaming-agent.

3. A method as in Claim 2, characterized in that methylene chloride is used as foaming-agent.

4. A method as in Claim 3, characterized in that fluoro-chloro-hydrocarbons are added to the methylene chloride.

5. A method as in Claim 4, characterized in that a mixture of methylene chloride and trichlorofluoromethane in the ratio of 1:3 is used as foaming agent.

6. A method as in Claim 1, characterized in that benzene, ester and/or ether are used as foaming-agent.

7. A method as in one of the Claims 1 to 6, characterized in that the A-constituent exhibits a charge of natural air (< 5 % by vol.).

## Revendications

1. Procédé de fabrication de corps moulés en mousse molle de polyuréthanne à peau intégrée, ayant une masse volumique de 0,3 a 0,8 g/cm³, en particulier de 0,3 à 0,6 g/cm³, par moussage du composant polyol (composant A) avec le composant isocyanate (composant B) en présence d'un agent moussant (composant C), caractérisé en ce que l'agent moussant, sous forme d'apport séparé, est ajouté sous haute pression dans une proportion de 0,5 à 5% en poids, en particulier de 1 à 2% en poids, par rapport à la masse totale des composants A, B et C, l'addition de l'agent moussant s'effectuant suivant l'une des trois variantes opératoires suivantes:
Variante I: L'agent moussant est ajouté au composent A peu avant l'expulsion a travers la buse;
Variante II: L'agent moussant est ajouté au composent B peu avant l'expulsion à travers la buse;
Variante III: L'agent moussant est ajouté en plus dans la tête mélangeuse lors de l'expulsion à travers la buse.

2. Procédé selon la revendication 1, caractérisé en ce que des hydrocarbures halogénés sont utilisés comme agent moussant.

3. Procédé selon la revendication 2, caractérisé en ce que du chlorure de méthylène est utilisé comme agent moussant.

4. Procédé selon la revendication 3, caractérisé en ce que des hydrocarbures fluorochlorés sont ajoutés au chlorure de méthylène.

5. Procédé selon la revendication 4, caractérisé en ce qu'un mélange de chlorure de méthylène et de trichlorofluorométhane dans le rapport 1:3 est utilisé comme agent moussant.

6. Procédé selon la revendication 1, caractérisé en ce que de l'essence, des esters et/ou des éthers sont utilisés comme agent moussant.

7. Procédé selon l'une quelconque des revendications 1 à 6, caractérisé en ce que le composant A présente une charge naturelle d'air (< 5% en volume).
